(19) **Europäisches Patentamt / European Patent Office / Office européen des brevets**

(11) **EP 1 427 929 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(21) Anmeldenummer: **02758110.7**

(22) Anmeldetag: **20.07.2002**

(51) Int Cl.:
*F02D 23/00* (2006.01)     *F02B 37/18* (2006.01)
*F02B 37/013* (2006.01)

(86) Internationale Anmeldenummer:
**PCT/DE2002/002683**

(87) Internationale Veröffentlichungsnummer:
**WO 2003/027464 (03.04.2003 Gazette 2003/14)**

(54) **VERFAHREN UND VORRICHTUNG ZUM BETREIBEN WENIGSTENS EINES LADERS EINES VERBRENNUNGSMOTORS**

METHOD AND DEVICE FOR OPERATING AT LEAST ONE TURBOCHARGER ON AN INTERNAL COMBUSTION ENGINE

PROCEDE ET DISPOSITIF POUR ACTIONNER AU MOINS UN TURBOCOMPRESSEUR DE MOTEUR A COMBUSTION INTERNE

(84) Benannte Vertragsstaaten:
**DE FR IT SE**

(30) Priorität: **13.09.2001 DE 10145038**

(43) Veröffentlichungstag der Anmeldung:
**16.06.2004 Patentblatt 2004/25**

(73) Patentinhaber: **ROBERT BOSCH GMBH**
**70442 Stuttgart (DE)**

(72) Erfinder:
• **WILD, Ernst**
**71739 Oberriexingen (DE)**
• **WEGENER, Sabine**
**71679 Asperg (DE)**
• **HILD, Rainer**
**71696 Moeglingen (DE)**

(56) Entgegenhaltungen:
EP-A- 1 070 837          DE-A- 19 708 721
DE-A- 19 935 901          DE-A- 19 936 269
US-A- 6 058 708

• ISERMANN R ET AL: "Modellgestützte Reglerentwicklung für einen Abgasturbolader mit variabler Turbinengeometrie an einem DI-Dieselmotor" MTZ MOTORTECHNISCHE ZEITSCHRIFT, FRANCKH'SCHE VERLAGSHANDLUNG, ABTEILUNG TECHNIK. STUTTGART, DE, Bd. 61, Nr. 3, März 2000 (2000-03), Seiten 184-193, XP000928799 ISSN: 0024-8525
• ZELLBECK HANS ET AL: "Die elektrisch unterstützte Abgasturboaufladung als neues Aufladekonzept" MTZ MOTORTECHNISCHE ZEITSCHRIFT, FRANCKH'SCHE VERLAGSHANDLUNG, ABTEILUNG TECHNIK. STUTTGART, DE, Bd. 60, Nr. 6, Juni 1999 (1999-06), Seiten 386-391, XP000833998 ISSN: 0024-8525
• VANTINE KATIE J ET AL: "ANALYSIS OF AN EVENT-BASED DIESEL ENGINE MODEL FOR CONTROL PURPOSES" IFAC WORKSHOP ON ADVANCES IN AUTOMOTIVE CONTROL, XX, XX, 28. März 2001 (2001-03-28), Seiten 361-366, XP001032737

EP 1 427 929 B1

## Beschreibung

Stand der Technik

Die Erfindung betrifft ein Verfahren und eine Vorrichtung zum Betreiben wenigstens eines Laders eines Verbrennungsmotors.

Aus der DE 199 35 901 A1 ist es bekannt, bei einer Ladedruckregelung den Abgasmassenstrom zu berücksichtigen.

Aus der US 6058708 ist es bekannt, eine Turbine eines Turboladers bzw. einen Bypass um die Turbine in Abhängigkeit einer Abweichung eines Sollabgasgegendruckes von einem Istwert anzusteuern.

Zur Leistungssteigerung von Motoren werden in einigen Anwendungsfällen Abgasturbolader verwendet. Dabei treibt der Abgasvolumenstrom eine Turbine an, die über eine Welle mit einem Verdichter verbunden ist, der die Ansaugluft verdichtet. Das Verdichtungsverhältnis ist eine Funktion des durch die Turbine fließenden Gasvolumenstroms. Der Abgasturbolader ist bei den bestehenden Lösungen dabei so ausgelegt, dass schon bei kleinen Gasströmen eine hohe Verdichtung zustande kommt. Damit es bei hohen Gasdurchsätzen nicht zu Verdichtungsverhältnissen und Turbinendrehzahlen kommt, die Schäden am Motor bzw. am Abgasturbolader verursachen können, ist ein Bypass um die Turbine gelegt, der "Waste-Gate" genannt wird. In diesem Bypass ist eine Klappe oder ein Ventil vorgesehen, welches den Öffnungsquerschnitt des Bypasses verändert. Die Klappe oder das Ventil wird bei einer bekannten Lösung von einem Gestänge betätigt, das von einer Membrandose bewegt wird. Die Membrane der Dose ist mit dem Gestänge verbunden. Eine Feder in der Dose drückt die Membrane nach oben. Gegen die Federkraft wirkt der Ladedruck, der über eine Schlauchleitung der Membrandose aus dem Saugrohr zugeführt wird. Bei hohen Ladedrücken hat der Ladedruck die Oberhand, das Waste-Gate öffnet. Diese Anordnung wirkt wie eine mechanischpneumatische Regelung. Abhängig vom Abgasvolumenstrom stellen sich bestimmte Ladedrücke im Saugrohr ein. Um den Ladedruck auch unabhängig von diesen physikalischen Verhältnissen variieren zu können, ist in die Schlauchleitung zur Membrandose ein Taktventil eingebaut. Aufgabe der Ladedruckregelung der Motorsteuerung ist es, dieses Taktventil so anzusteuern, dass sich ein gewünschter Ladedruck einstellt. Mit Vergrößerung des Taktverhältnisses wird immer mehr Luft aus der Schlauchleitung ins Freie abgeblasen. Damit sinkt der Gegendruck gegen die Feder, das Waste-Gate schließt, der Ladedruck steigt (vgl. z. B. Bosch, Kraftfahrtechnisches Taschenbuch, 22. Auflage, Seiten 475 und 476).

Es hat sich gezeigt, dass auch andere Verstellmechanismen zur Steuerung des Öffnungsquerschnitts des Bypasses einsetzbar sind, beispielsweise die Betätigung des Gestänges der Klappe durch einen elektrischen Steller. Damit entfällt die pneumatische Gegenkopplung über den Ladedruck, die den Abgasturbolader eigenstabil macht. Die pneumatische Gegenkopplung vergrößert mit steigendem Ladedruck den Öffnungsquerschnitt und verhindert somit ein Überdrehen der Turbine. Ohne pneumatische Gegenkopplung ist der Abgasturbolader mitkoppelnd und daher instabil. Andere Verstellmechanismen sind beispielsweise eine variable Turbinengeometrie, eine variable Schieberturbine oder eine Klappe im Waste-Gate, die mit einem Stellmotor bewegt wird. Auch diesen Stellern fehlt zumindest teilweise die Gegenkoppeleigenschaft. Es besteht daher ein Bedarf an einer Ladedruckregelung, die universell einsetzbar ist und die Stabilität des Abgasturboladers sicherstellt.

Weiterhin ist zu berücksichtigen, dass zur Verbesserung des Ansprechverhaltens eines Abgasturboladers ein in Reihe geschalteter elektrischer Kompressor eingesetzt wird. Dieser wird beispielsweise unterhalb einer vorgegeben Motordrehzahl bei einer Beschleunigungsanforderung durch den Fahrer eingestellt (vgl. z. B. US-Patent 6 029 452). Eine Ladedruckregelung sollte auch bei einer solchen Anordnung einsetzbar sein.

Vorteile der Erfindung

Durch die Steuerung des Ladersystems abhängig vom Abgasvolumenstrom wird die regelungstechnische Beherrschbarkeit eines Abgasturboladersystems durch eine elektronische Ladedruckregelung sichergestellt. In vorteilhafter Weise wird dabei die Verwendung des gleichen Regelalgorithmus für verschiedene Stellertypen ermöglicht. Dies deshalb, weil die bei der Verwendung anderer Steller am Abgasturbolader fehlenden Gegenkoppeleigenschaften durch den Aufbau einer elektrischen Vorsteuerung des Stellers in Abhängigkeit des Abgasvolumenstroms nachgebildet wird. Dadurch werden auch Beschädigungen des Ladersystems bei der Applikation der Ladedruckreglerparameter wirksam vermieden.

Die genannten Vorteile werden auch beim Einsatz eines elektrischen Ladersystems, insbesondere eines elektrischen Hilfsladers in Verbindung mit einem Abgasturbolader erreicht. Auch hier wird durch die abgasvolumenstromabhängige Vorsteuerung das gegenkoppelnde Verhalten nachgebildet.

In vorteilhafter Weise wird auf der Basis des Abgasvolumenstroms der Einschaltzeitpunkt und die Einschaltdauer des elektrischen Zusatzkompressors abgeleitet, indem der Zusatzkompressor nur so lange eingeschaltet ist, bis der Abgasvolumenstrom den Turbinenbedarfsvolumenstrom erreicht hat. In vorteilhafter Weise wird dadurch die Einschaltdauer des elektrischen Zusatzkompressors und damit die Batteriebelastung minimiert.

Vorteilhaft ist ferner, dass der Zusatzkompressor nur dann eingeschaltet, wenn ein Solladedruck gefordert wird, der den Grundladedruck übersteigt.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. Figur 1 zeigt eine Übersichtsdarstellung einer Brennkraftmaschine mit einem Abgasturbolader, dessen Steuerung in Figur 2 anhand eines Ablaufdiagramms dargestellt ist. Figur 3 zeigt ein Übersichtsbild einer Brennkraftmaschine mit Abgasturbolader und elektrischem Zusatzlader, deren Steuerung in Figur 4 anhand eines weiteren Ablaufdiagramms dargestellt ist.

Beschreibung von Ausführungsbeispielen

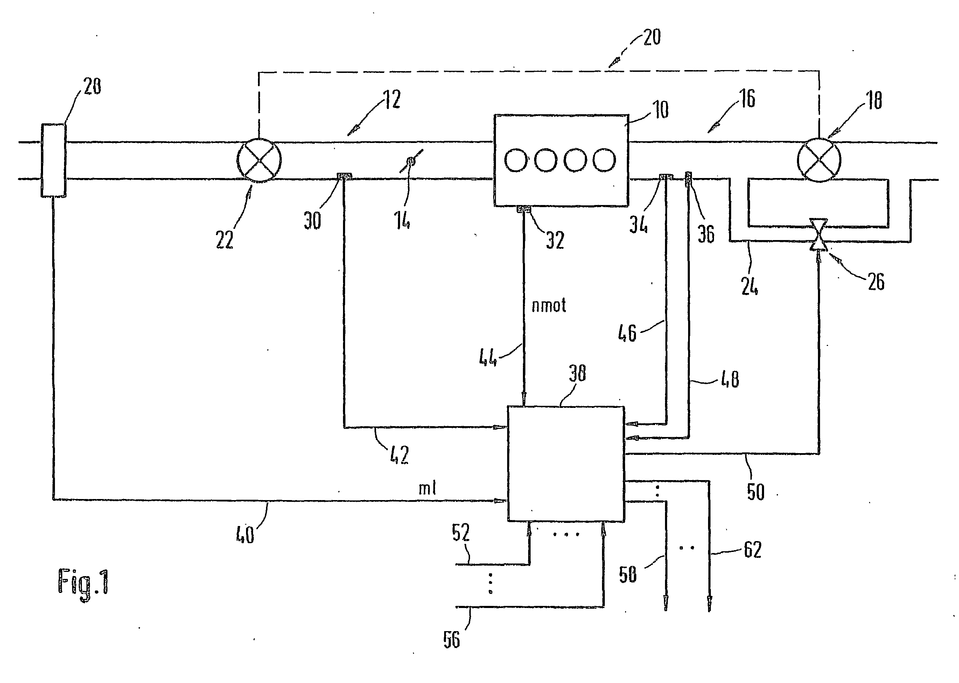

Im Übersichtsbild der Figur 1 ist eine Brennkraftmaschine 10 dargestellt, welche ein Ansaugsystem 12 mit einer Drosselklappe 14 und ein Abgassystem 16 umfaßt. Im Abgassystem 16 ist die Turbine 18 eines Abgasturboladers angeordnet, welche über eine mechanische Verbindung 20 mit dem Saugrohr angeordneten Verdichter bzw. Kompressor 22 verbunden ist. In einem Umgehungskanal 24 um die Turbine 18 des Abgasturboladers herum ist ein elektrisch betätigbares Ventil 26 vorgesehen. Zur Erfassung verschiedener Betriebsgrößen im Bereich der Brennkraftmaschine sind verschiedene Sensoren eingesetzt. Eine Auswahl dieser Sensoren ist mit Blick auf die nachfolgend beschriebene Vorgehensweise in Figur 1 dargestellt: ein Luftmassenmesser 28, ein Saugrohrdruckfühler 30, ein Motordrehzahlfühler 32, ein Abgasdruckfühler 34 und ein Abgastemperatursensor 36. Ferner ist ein elektronisches Steuergerät 38 dargestellt, dem von den genannten Sensoren Leitungen zugeführt werden: eine Leitung 40 vom Luftmassenmesser 28, eine Leitung 42 vom Saugrohrdrucksensor 30, eine Leitung 44 vom Drehzahlsensor 32, eine Leitung 46 vom Abgasdrucksensor 34 und eine Leitung 48 vom Abgastemperatursensor 36. Ferner weist die Steuereinheit 38 eine Ausgangsleitung 50 auf, die zur Steuerung des elektrisch betätigbaren Ventils 26 dient. Neben den dargestellten Eingangs- und Ausgangsleitungen sind weitere Eingangs- und Ausgangsleitungen vorgesehen, die zur Steuerung der Brennkraftmaschine notwendig sind. Diese sind in Figur 1 mit den Leitungen 52 bis 56 bzw. 58 bis 62 symbolisiert und nicht näher ausgeführt, da sie in Verbindung mit der nachfolgend beschriebenen Vorgehensweise zum Betreiben des Laders von nur zweitrangiger Bedeutung sind. Die Eingangsleitungen 52 bis 56 verbinden die Steuereinheit 38 mit Sensoren wie Lambdasensoren, Temperatursensoren, etc., während die Ausgangsleitungen 58 bis 62 auf Einspritzventile, Zündungsendstufen, Drosselklappensteller, Abgasrückführventile, etc. geführt sind.

Im Nachfolgenden wird eine Vorgehensweise beschrieben, mit deren Hilfe das Ventil 26 im Rahmen des Betriebs des Abgasturboladersystems betätigt wird. Im bevorzugten Ausführungsbeispiel handelt es sich bei dem Stellelement 26 um einen Stellmotor, der an der Stelle der Membrandose und des Taktventils das Gestänge bewegt, das den Bypassquerschnitt der Bypassleitung 24 verstellt. Die nachfolgend beschriebene Vorgehensweise läßt sich jedoch auch bei Systemen anwenden, die eine andere Struktur des Stellers aufweisen, beispielsweise auch auf elektrisch betätigbare Ventile.

Grundprinzip der Vorgehensweise ist, dass abhängig vom Abgasvolumenstrom die Betätigung des Stellelements 26 erfolgt, und somit eine Vorsteuerung für die Ladedruckregelung erzeugt wird, die die Gegenkopplungseigenschaften nachbildet. Im konkreten Ausführungsbeispiel wird abhängig von Motordrehzahl und Solladedruck der Abgasvolumenstrom berechnet, bei dem sich der Solladedruck einstellt. Dies erfolgt im bevorzugten Ausführungsbeispiel mittels eines Kennfeldes, in dem Parameter abgelegt sind, die die mechanischen und geometrischen Eigenschaften des Turboladersystems berücksichtigen. Ferner wird der vom Motor erzeugte Abgasvolumenstrom berechnet. Dies erfolgt beispielsweise mittels eines Modells, in welchem abhängig vom zur Brennkraftmaschine geführten Luftmassenstrom ml (gemessen durch den Luftmassenmesser 28), der Abgastemperatur und dem Abgasdruck der Abgasvolumenstrom bestimmt wird. Die Differenz zwischen dem Sollabgasvolumenstrom und dem aktuellen Abgasvolumenstrom ergibt den Abgasvolumenstrom, der über den Bypass zur Turbine fließen soll. Dieser Volumenstrom wird moduliert durch das Ausgangssignal des Ladedruckreglers, welches als Differenzvolumenstrom interpretiert wird. Der aus der Abweichung zwischen Soll- und Istvolumenstrom zuzüglich dem vom Ladedruckregler berechneten Volumenstrom wird zur Bestimmung der Stellung des elektrischen Stellers ausgewertet. Dabei ist beispielsweise eine Kennlinie vorgesehen, in welcher der Volumenstrom in ein Stellsignal umgesetzt wird.

Die dargestellte Vorsteuerung über dem Abgasvolumenstrom hat Gegenkopplungseigenschaft, die dadurch zustande kommt, dass der vom Motor erzeugte Abgasvolumenstrom berücksichtigt wird. Wenn der Sollvolumenstrom über die Turbine geleitet wird, erhöht sich die Turbinendrehzahl und damit auch die Drehzahl des auf der Saugseite sitzenden Verdichters. Damit erhöht sich der Ladedruck und der Abgasvolumenstrom. Die Berechnung und Auswertung des Abgasvolumenstroms in der Steuerung berücksichtigt dies, da die Vorsteuerung dann den Öffnungsquerschnitt des Bypasses erhöht. Das Abgasturboladersystem bleibt somit stabil.

Der Ladedruckregler selber führt nur noch Korrekturen an einem stabilen System durch. In vorteilhafter Weise genügt daher als Ladedruckregler ein gebräuchlicher, robuster und leicht applizierbarer Regler beispielsweise ein Regler mit Proportional-, Integral- und Differenzialverhalten, der auch bei Stellern mit Gegenkoppeleigenschaften wie eingangs erwähnt zum Einsatz kommt.

Die Vorsteuerung selbst arbeitet derart, dass auch bei ausgeschaltetem Regler bei steigendem Abgasvolumenstrom der Öffnungsquerschnitt des Bypass nicht konstant ist, sondern sich erhöht.

Die vorstehend beschriebene Vorgehensweise findet im bevorzugten Ausführungsbeispiel ihre Realisierung als Programm eines Mikrocomputers, welcher Teil der Steuereinheit 38 ist. Das Programm des Mikrocomputers umfaßt dabei die zur Durchführung der Vorgehensweise benötigten Befehle.

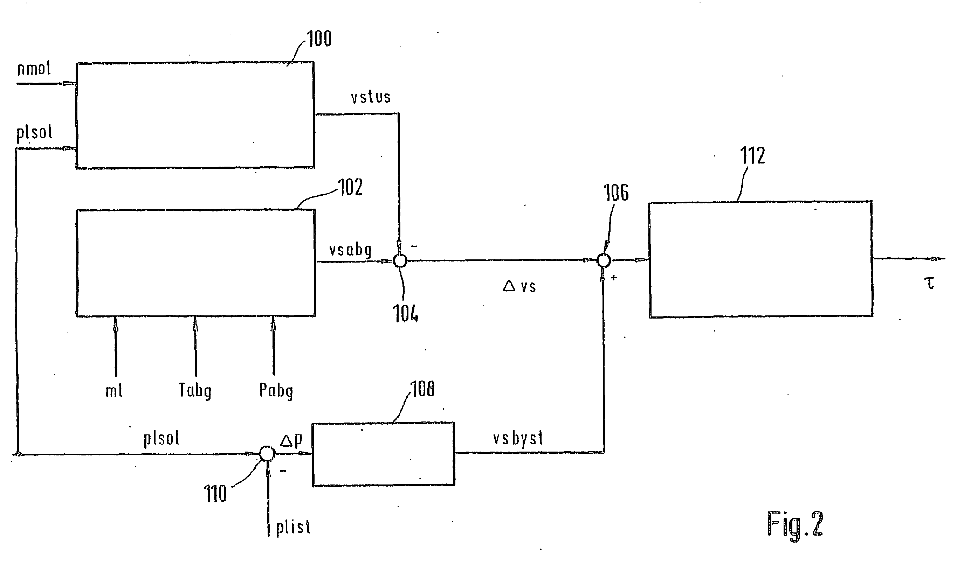

Figur 2 zeigt ein Ablauf diagramm eines solchen Programms, wobei die einzelnen Blöcke Programme, Programmteile oder Programmschritte, insbesondere Befehle oder eine Summe von Befehlen darstellen, während die Verbindungslinien den Informationsfluß repräsentieren.

Zunächst wird in 100 abhängig von Motordrehzahl nmot und Solladedruck plsol ein Sollvolumenstrom VSTUS über der Turbine berechnet. Dies erfolgt im bevorzugten Ausführungsbeispiel nach Maßgabe eines Kennfeldes, in einem anderen Ausführungsbeispiel nach Maßgabe von Berechnungsschritten. Im Wesentlichen wird dabei mit steigendem Solladedruck und steigender Drehzahl der Sollvolumenstrom ansteigen.

Der Solladedruck selbst wird aus einem Solldruckverhältnis zwischen dem Druck vor und dem Druck nach dem Verdichter ermittelt, welches wiederum abhängig von der Motordrehzahl ist. In 102 wird der Istabgasvolumenstrom VSABG ermittelt. Dieser Istabgasvolumenstrom wird in einem bevorzugten Ausführungsbeispiel nach Maßgabe der zugeführten Luftmasse ml, der Abgastemperatur Tabg und dem Abgasgegendruck Pabg berechnet. Dabei wird die Abgastemperatur und die zugeführte Luftmasse berechnet, während der Abgasgegendruck gemessen oder nach einem Modell berechnet wird. Im bevorzugten Ausführungsbeispiel wird eine Gleichung zur Berechnung des Istabgasvolumenstroms eingesetzt, die in etwa das folgende Aussehen hat:

$$VSABG = k \cdot ML \cdot TABG/PABG$$

Wobei k eine Konstante ist.

In der Verknüpfungsstelle 104 wird die Abweichung zwischen Sollvolumenstrom VSTUS und Istabgasvolumenstrom VSABG ermittelt ($\Delta$VS = VSABG - VSTUS). Die Abweichung $\Delta$VS wird einer weiteren Verknüpfungsstelle 106 zugeführt.

Ferner ist ein Regelalgorithmus 108 vorgesehen, welcher eine Ausgangsgröße VSBYST in Abhängigkeit seiner Eingangsgröße ermittelt. Die Eingangsgröße ist dabei eine Abweichung $\Delta$P, welche in der Verknüpfungsstelle 110 gebildet wird. In dieser wird der Solladedruck und der durch einen Ladedruckfühler gemessene Istladedruck PLIST miteinander verglichen, und die gebildete Abweichung dem Regler zugeführt. Der Regleralgorithmus bildet dann die Ausgangsgröße, welche in der Verknüpfungsstelle 106 die Vorsteuergröße $\Delta$VS korrigiert. Die Korrektur ist beispielsweise als Addition ausgeführt. Die korrigierte Vorsteuergröße $\Delta$VS + VSBYST wird in 112 in ein Ansteuersignal für den Steller des Abgasturboladers umgesetzt. Dies erfolgt im bevorzugten Ausführungsbeispiel im Rahmen einer Kennlinie, welche der Eingangsgröße eine Ausgangsgröße $\tau$ zuordnet.

Eine Steuergröße mit der Größe $\tau$ als Parameter wird vom Mikrocomputer bzw. der Steuereinheit zur Ansteuerung des Ventils oder Stellers des Laders ausgegeben, welches einen Volumenstrom im Bypass der Turbine einstellt. Dieser Volumenstrom entspricht dem Volumenstrom gemäß Vorsteuerung plus Reglerkorrektur.

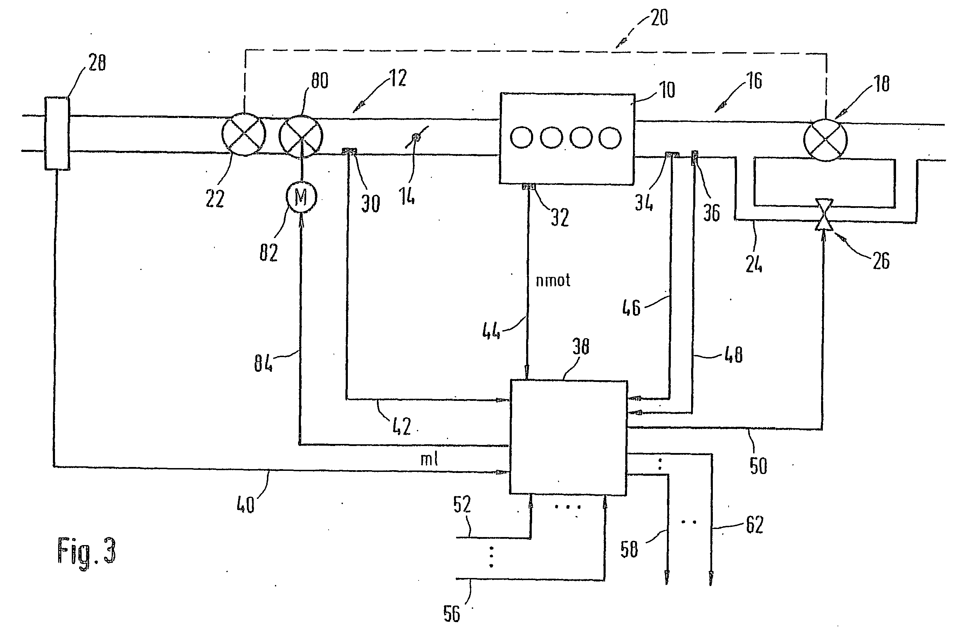

In einem zweiten Ausführungsbeispiel wird die vorstehend beschriebenen Vorgehensweise in Verbindung mit einem Turboladersystem angewendet, welches zusätzlich zum mechanischen Abgasturbolader einen elektrischen Hilfslader aufweist. Ein derartiges System ist im Übersichtsbild der Figur 3 dargestellt. Das in Figur 1 dargestellte System ist dabei ergänzt durch einen elektromotorisch angetriebenen Hilfslader 80, der in Strömungsrichtung nach dem Verdichter 22 und vor der Drosselklappe 14 im Ansaugtrakt der Brennkraftmaschine 10 angeordnet ist. Dieser Hilfslader wird von einem Elektromotor 82 angetrieben, der über eine Ausgangsleitung 84 vom Steuergerät 38 mit einem Ansteuersignal versorgt wird. Die anderen Komponenten und Leitungen entsprechen den in Figur 1 dargestellten, so dass sie mit denselben Bezugszeichen versehen sind und dieselbe Funktion aufweisen.

Ein derartiger elektrischer Hilfslader wird wegen des verzögerten Ansprechverhaltens des Abgasturboladers zu diesem in Reihe geschaltet und in der Regel dann eingeschaltet, wenn eine Beschleunigungsanforderung vorliegt. Dadurch wird das verzögerte Ansprechverhalten bei Beschleunigung kompensiert und der Betrieb optimiert. Die Betriebsdauer des elektrischen Hilfsladers, der Ressourcen des Fahrzeugs verbraucht, insbesondere die Batterie stark belastet, sollte minimiert sein. Es hat sich gezeigt, dass diese Minimierung erreicht werden kann, wenn der elektrische Kompressor eingeschaltet wird, wenn der aktuelle Abgasvolumenstrom unter dem Turbinenbedarfsstrom liegt. Diese Größen stehen aus der vorgenannten Vorsteuerung zur Verfügung. Ein weiteres Kriterium für das Einschalten des elektrischen Zusatzkompressors, welches zusätzlich zu dem obengenannten eingesetzt werden kann, ist, dass ein Solladedruck gefordert wird, der den Grundladedruck übersteigt. Der Grundladedruck ist dabei der Druck, der sich ohne besondere Ansteuerung des Abgasturboladers in Folge der Luftströmung zur Brennkraftmaschine einstellt.

Der Zusatzkompressor wird nur so lange eingeschaltet, bis der aktuelle Abgasvolumenstrom den Turbinenbedarfsstrom erreicht hat. Damit ist die Einschaltdauer des Zusatzkompressors und damit auch die Batteriebelastung minimiert. Grund hierfür ist, dass der Abgasturbolader selbst ein mitkoppelndes Verhalten hat. Wenn der Turbinenbedarfsvolumenstrom überschritten wird, dreht die Turbine schneller, der Verdichter dreht mit und erhöht den Ladedruck. Der Abgasvolumenstrom steigt an, was wieder zu einem schnelleren Drehen der Turbine führt. Wie vorstehend beschrieben, muß mit steigendem Ladedruck immer mehr Abgas um die Turbine herum geleitet werden, damit die Turbine nicht überdreht. Dies wird, wie oben dargestellt, durch die genannte Vorsteuerung erreicht. Ist also der Turbinenbedarfsvolumenstrom erreicht, so ist keine Zusatzverdichtung durch den elektrischen Zusatzkompressor notwendig, da der Abgasturbolader dann durch sein mitkoppelndes Verhalten einen ausreichenden Ladedruck bereitstellt.

Wesentlich sind also geeignete Maßnahmen, die Einschaltbedingung für den elektrischen Zusatzkompressor zu bestimmen. Dies wird aus der oben dargestellten Vorsteuerung des Abgasturboladerstellers abgeleitet. Dort wird der Abgasvolumenstrom aus den gemessenen oder modellierten Größen Luftmassenstrom, Abgastemperatur und Abgasdruck berechnet. Ebenso wird der zum Anspringen des Abgasturboladers benötigte Bedarfsvolumenstrom ermittelt. Dieser ist entweder als Festwert vorgegeben oder wird wie oben dargestellt aus Ladedruck und Drehzahl ermittelt. Ist der aktuelle Abgasvolumenstrom größer als der Turbinenbedarfsstrom, so wird die Abweichung der beiden Ströme über das Waste-Gate an der Turbine vorbei geschickt. Auf diese Weise wird verhindert, dass die Turbine überdreht. Ist für die Turbine der Bedarf an Volumenstrom jedoch höher als der gelieferte Abgasstrom, so wird eine Einschaltbedingung für den elektrischen Hilfslader gesetzt. Der Zusatzkompressor wird dann angeschaltet und ein Ansteuersignal für den elektrischen Motor 82 generiert. Dadurch erhöht sich der Abgasmassenstrom, und die Turbine springt an. Wenn der Abgasstrom den Turbinenbedarfsstrom um einen Betrag übersteigt, wird der Zusatzkompressor wieder abgeschaltet. In vorteilhafter Weise ist hier eine Schalthysterese vorgesehen.

In einem weiteren Ausführungsbeispiel wird der Zusatzkompressor nur dann eingeschaltet, wenn zusätzlich zu dem aus der Abgasstrom abgeleiteten Einschaltbedingung eine Forderung nach Aktivierung der Ladedruckregelung vorliegt, d. h. wenn der Solladedruck den Grundladedruck übersteigt.

Durch die vorstehend beschriebene Vorgehensweise schaltet der Zusatzkompressor bei unterschiedlichen Betriebsbedingungen (z. B. Last, Drehzahl) immer beim gleichen Abgasvolumenstrom ab. Die Einschaltdauer des Zusatzkompressors ist optimiert.

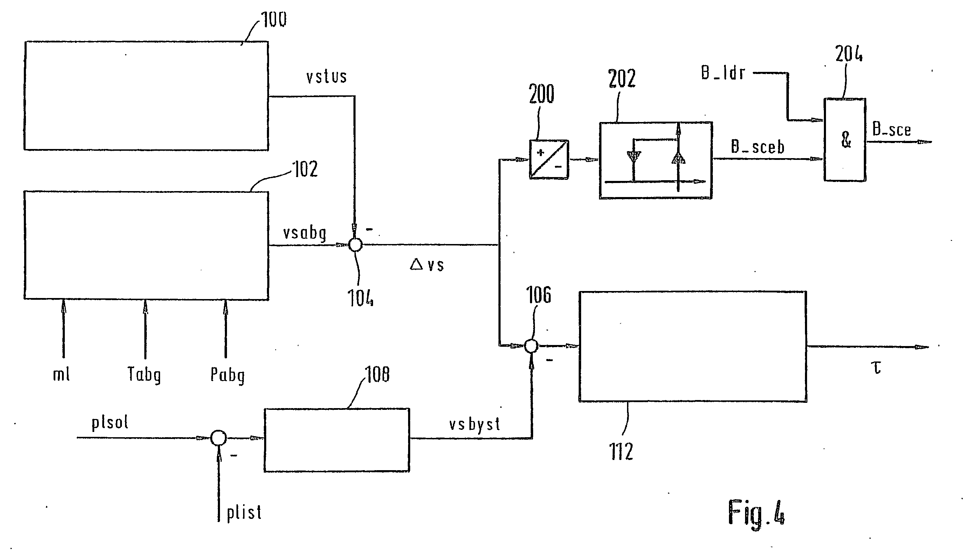

Die Realisierung der oben beschriebenen Vorgehensweise erfolgt auch hier analog wie im ersten Ausführungsbeispiel mittels eines Programms des Mikrocomputers der Steuereinheit 38. Ein Ablaufdiagramm für ein derartiges Programm ist in Figur 4 skizziert. Auch hier sind die bereits anhand des Ablaufdiagramms der Figur 2 beschriebenen Teile mit denselben Bezugszeichen versehen und weisen die anhand Figur 2 beschriebene Funktion auf.

In 100 wird also der Sollvolumenstrom bestimmt, der entweder aus Drehzahl und Solladedruck oder als Festwert vorgegeben ist. Dieser wird mit dem Abgasvolumenstrom, der wie oben berechnet wird, verglichen. Die Abweichung ($\Delta VS = VAABG - VSTUS$) der beiden Werte stellt den Volumenstrom dar, der über das Waste-Gate abzuleiten ist. Dieser Wert wird nach Korrektur durch den Ladedruckregler in 106 in ein Ansteuersignal für den Steller des Abgasturboladers, insbesondere für den Steller der Bypassklappe umgerechnet.

Zur Aktivierung des elektrischen Hilfsladers ist ein Inverter 200 vorgesehen, der auf ein Schaltelement 202 geführt wird, das vorzugsweise eine Hysterese aufweist. Überschreitet der invertierte Volumenstrom $\Delta VS$ den vorgegebenen Grenzwert, wird ein Einschaltbedingungssignal B_SCEB gebildet. Unterschreitet der Volumenstrom eine weitere Schwelle, wird dieses Bedingungssignal zurückgesetzt. Die Schwelle ist dabei derart gewählt, dass das Rücksetzen dann erfolgt, wenn der aktuelle Abgasvolumenstrom den Sollvolumenstrom erreicht oder größer als ein vorgegebenes Maß überschritten hat. Somit wird der Hilfslader eingeschaltet, wenn der Abgasvolumenstrom kleiner als der Sollvolumenstrom ist. Zusätzlich ist in einem bevorzugten Ausführungsbeispiel eine logische UND-Verknüpfung 204 vorgesehen, in dem das wie oben beschriebene Bedingungssignal mit einem weiteren Bedingungssignal B_LDR verglichen wird. Dieses wird gesetzt, wenn eine Ladedruckregelung angefordert ist, d. h. wenn der Solladedruck den Grundladedruck übersteigt. Liegen beide Signale vor, wird ein Bedingungssignal B_SCE ausgegeben, welches zur Aktivierung des elektrischen Hilfsladers führt. Dieser wird dann entweder mit einem fest vorgegebenen Ansteuersignal angesteuert oder bedarfsabhängig nach Maßgabe von Istladedruck, Luftströmung und/oder Drehzahl des Motors, etc. angesteuert.

Dargestellt ist ein bevorzugtes Ausführungsbeispiel, bei dem die Berechnungen auf der Basis von Volumenströmen erfolgt. In anderen Ausführung wird anstelle der Volumenströmen Massenströme (Abgasmassenstrom) eingesetzt.

**Patentansprüche**

1. Verfahren zum Betreiben wenigstens eines Laders eines Verbrennungsmotors, mit einem Ladedruckregler, dessen Ausgangssignal ein Ansteuersignal zur Steuerung eines Stellelements des wenigstens einen Laders erzeugt, **dadurch gekennzeichnet, dass** eine Vorsteuerung des Stellelements des wenigstens einen Laders vorgesehen ist, welche abhängig vom Abgasstrom bestimmt wird.

2. Verfahren nach Anspruch 1, **dadurch gekennzeichnet, dass** das Stellelement ein Stellelement zur Steuerung des Öffnungsquerschnitts eines Bypasskanals um eine Turbine eines als Abgasturbolader ausgebildeten Laders oder ein elektrischer Zusatzlader ist.

3. Verfahren nach Anspruch 1, **dadurch gekennzeichnet, dass** diese Größe ein Abgasvolumenstrom oder ein Abgasmassenstrom ist.

4. Verfahren nach einem der vorhergehenden Ansprüche, **dadurch gekennzeichnet, dass** der Abgasvolumenstrom nach Maßgabe der zugeführten Luftmasse, der Abgastemperatur und des Abgasdrucks berechnet wird.

5. Verfahren nach einem der vorhergehenden Ansprüche, **dadurch gekennzeichnet, dass** ein Sollstrom vorgegeben wird, eine Abweichung zwischen dem Sollstrom und dem Iststrom gebildet wird und das Abweichungssignal zur Bestimmung des Ansteuersignals herangezogen wird.

6. Verfahren nach Anspruch 4, **dadurch gekennzeichnet, dass** der Sollstrom fest vorgegeben ist oder abhängig von Betriebsgrößen wie Motordrehzahl und Sollladedruck bestimmt wird.

7. Verfahren nach einem der vorhergehenden Ansprüche, **dadurch gekennzeichnet, dass** der Ladedruckregler ein Ausgangssignal abhängig von Sollladedruck und Istladedruck erzeugt.

8. Verfahren nach einem der vorhergehenden Ansprüche, **dadurch gekennzeichnet, dass** das Ladedruckreglerausgangssignal das abhängig vom Abgasstrom gebildete Vorsteuersignal korrigiert.

9. Verfahren nach einem der vorhergehenden Ansprüche, **dadurch gekennzeichnet, dass** das Aktivierungssignal für einen Zusatzkompressor abhängig vom Abgasstrom gebildet wird.

10. Verfahren nach Anspruch 7, **dadurch gekennzeichnet, dass** die Aktivierung des Zusatzkompressors dann erfolgt, wenn der Abgasvolumenstrom kleiner als der Sollvolumenstrom ist.

11. Verfahren nach einem der vorhergehenden Ansprüche, **dadurch gekennzeichnet, dass** die Aktivierung des Zusatzkompressors erfolgt, wenn der Sollladedruck größer als der Grundladedruck ist.

12. Verfahren nach einem der vorhergehenden Ansprüche, **dadurch gekennzeichnet, dass** der Zusatzkompressor abgeschaltet wird, wenn der Abgasstrom den Sollstrom erreicht oder mit einem bestimmten Maß überschritten hat, oder wenn der Sollladedruck kleiner als der Grundladedruck ist.

13. Vorrichtung zum Betreiben wenigstens eines Laders eines Verbrennungsmotors, mit einer elektronischen Steuereinheit, die einen Ladedruckregler umfasst, dessen Ausgangssignal ein Ansteuersignal zur Steuerung eines Stellelements des wenigstens einen Laders erzeugt, **dadurch gekennzeichnet, dass** die Steuereinheit ferner eine Vorsteuerung aufweist, welche das Ansteuersignal für das Stellelement des wenigstens einen Laders abhängig vom Abgasstrom bestimmt.

## Claims

1. Method for operating at least one supercharger of an internal combustion engine, with a boost-pressure controller, the output signal of which generates an activation signal for controlling an actuating element of the at least one supercharger, **characterized in that** a pilot control of the actuating element of the at least one supercharger is provided, which is determined as a function of the exhaust-gas stream.

2. Method according to Claim 1, **characterized in that** the actuating element is an actuating element for controlling the opening cross section of a bypass duct around a turbine of a supercharger designed as an exhaust-gas turbocharger or is an additional electrical supercharger.

3. Method according to Claim 1, **characterized in that** this variable is an exhaust-gas volume flow or an exhaust-gas mass flow.

4. Method according to one of the preceding claims, **characterized in that** the exhaust-gas volume flow is calculated according to the air mass supplied, the exhaust-gas temperature and the exhaust-gas pressure.

5. Method according to one of the preceding claims, **characterized in that** a desired stream is predetermined, a deviation between the desired stream and the actual stream is formed, and the deviation signal is used for determining the activation signal.

6. Method according to Claim 4, **characterized in that** the desired stream is permanently predetermined or is determined as a function of operating variables, such as the engine rotational speed and the desired boost pressure.

7. Method according to one of the preceding claims, **characterized in that** the boost-pressure controller generates an output signal as a function of the desired boost pressure and the actual boost pressure.

8. Method according to one of the preceding claims, **characterized in that** the boost-pressure controller output signal corrects the pilot control signal formed as a function of the exhaust-gas stream.

9. Method according to one of the preceding claims, **characterized in that** the activation signal for an additional compressor is formed as a function of the exhaust-gas.stream.

10. Method according to Claim 7, **characterized in that** the activation of the additional compressor takes place when the exhaust-gas volume flow is lower than the desired volume flow.

11. Method according to one of the preceding claims, **characterized in that** the activation of the additional compressor takes place when the desired boost pressure is higher than the basic boost pressure.

12. Method according to one of the preceding claims, **characterized in that** the additional compressor is switched off when the exhaust-gas stream reaches the desired stream or has overshot this by a specific amount or when the desired boost pressure is lower than the basic boost pressure.

13. Device for operating at least one supercharger of an internal combustion engine, with an electronic control unit comprising a boost-pressure controller, the output signal of which generates an activation signal for controlling an actuating element of the at least one supercharger, **characterized in that** the control unit has, furthermore, a pilot control which determines the activation signal for the actuating element of the at least one supercharger as a function of the exhaust-gas stream.

**Revendications**

1. Procédé de gestion d'au moins un turbocompresseur d'un moteur à combustion interne, comprenant un régulateur de pression de charge, dont le signal de sortie génère un signal de commande pour la commande d'un actionneur d'au moins un turbocompresseur, **caractérisé en ce qu'**
on prévoit un pilotage de l'actionneur d'au moins un turbocompresseur, déterminé en fonction du flux de gaz d'échappement.

2. Procédé selon la revendication 1, **caractérisé en ce que**
l'actionneur est un actionneur pour la commande de la section d'ouverture d'un canal de dérivation autour d'une turbine d'un turbocompresseur configuré sous forme de turbocompresseur des gaz d'échappement, ou un turbocompresseur supplémentaire électrique.

3. Procédé selon la revendication 1, **caractérisé en ce que**
le flux de gaz est un débit volumique de gaz d'échappement ou un débit massique de gaz d'échappement.

4. Procédé selon l'une des revendications précédentes, **caractérisé en ce que**
le débit volumique est calculé en fonction de la masse d'air amenée, de la température des gaz d'échappement et de la pression des gaz d'échappement.

5. Procédé selon l'une des revendications précédentes, **caractérisé en ce qu'**
on prédétermine un flux de consigne, on forme une différence entre le flux de consigne et le flux réel et on utilise le signal de différence pour déterminer le signal de commande.

6. Procédé selon la revendication 4, **caractérisé en ce que**
le flux de consigne est prédéterminé fixement ou déterminé en fonction de grandeurs de fonctionnement telles que le régime du moteur et la pression de charge de consigne.

7. Procédé selon l'une des revendications précédentes, **caractérisé en ce que**
le régulateur de la pression de charge génère un signal de sortie en fonction de la pression de charge de consigne et de la pression de charge réelle.

8. Procédé selon l'une des revendications précédentes, **caractérisé en ce que**
le signal de sortie du régulateur de la pression de charge corrige le signal de pilotage formé en fonction du flux de gaz d'échappement.

9. Procédé selon l'une des revendications précédentes, **caractérisé en ce que**
le signal d'activation pour un compresseur supplémentaire est formé en fonction du flux de gaz d'échappement.

10. Procédé selon la revendication 7, **caractérisé en ce que**
l'activation du compresseur supplémentaire s'effectue lorsque le débit volumique de gaz d'échappement est inférieur au débit volumique de consigne.

11. Procédé selon l'une des revendications précédentes, **caractérisé en ce que**

l'activation du compresseur supplémentaire s'effectue lorsque la pression de charge de consigne est supérieure à la pression de charge de base.

**12.** Procédé selon l'une des revendications précédentes,
**caractérisé en ce que**
le compresseur supplémentaire est désactivé lorsque le flux de gaz d'échappement atteint le flux de consigne ou le dépasse d'une valeur donnée, ou lorsque la pression de charge de consigne est inférieure à la pression de charge de base.

**13.** Dispositif permettant de faire fonctionner au moins un turbocompresseur d'un moteur à combustion interne, comprenant une unité de commande électronique qui comprend un régulateur de la tension de charge, dont le signal de sortie génère un signal de commande pour la commande d'un actionneur d'au moins un turbocompresseur,
**caractérisé en ce que**
l'unité de commande présente en outre une unité de pilotage qui détermine le signal de commande pour l'actionneur d'au moins un turbocompresseur en fonction du flux de gaz d'échappement.

EP 1 427 929 B1

Fig.1

Fig. 2

τ

112

106

+

Δvs

vsbyst

108

104

−

vstus

vsabg

ΔP

102

−

plist

plsol

100

Pabg

Tabg

ml

110

nmot

plsol

Fig.3

EP 1 427 929 B1

11

EP 1 427 929 B1

Fig.4